(19) Europäisches Patentamt
European Patent Office
Office européen des brevets

(11) Publication number: **0 231 781 B1**

(12) **EUROPEAN PATENT SPECIFICATION**

(45) Date of publication of patent specification: **01.04.92**

(51) Int. Cl.⁵: **G02F 1/133**, G02F 1/137

(21) Application number: **87100473.5**

(22) Date of filing: **15.01.87**

(54) **Liquid crystal display element.**

(30) Priority: **22.01.86 JP 10165/86**
**29.01.86 JP 15901/86**

(43) Date of publication of application:
**12.08.87 Bulletin 87/33**

(45) Publication of the grant of the patent:
**01.04.92 Bulletin 92/14**

(84) Designated Contracting States:
**DE GB**

(56) References cited:
**EP-A- 0 059 790**
**US-A- 3 994 567**
**US-A- 4 494 824**

**PATENT ABSTRACTS OF JAPAN, unexamined applications, field P, vol.9 no.64, March 23, 1985 THE PATENT OFFICE JAPANESE GOVERNMENT page 94 P 343**

**PATENT ABSTRACTS OF JAPAN, unexamined applications, field P, vol.9, no. 177, July 23, 1985 THE PATENT OFFICE JAPANESE GOVERNMENT page 7 P 375**

(73) Proprietor: **HITACHI, LTD.**
**6, Kanda Surugadai 4-chome**
**Chiyoda-ku, Tokyo 101(JP)**

(72) Inventor: **Yokokura, Hisao**
**10-1, Higashi Narusawa-cho 2-chome**
**Hitachi-shi Ibaraki 316(JP)**
Inventor: **Nakata, Tadao**
**212-123, Kouya**
**Katsuta-shi Ibaraki 312(JP)**
Inventor: **Era, Susumu**
**33-2, Nishi Narusawa 1-chome**
**Hitachi-shi Ibaraki 316(JP)**
Inventor: **Hanawa, Yasuo**
**45-12, Taisei-cho**
**Katsuta-shi Ibaraki 312(JP)**
Inventor: **Iwasaki, Kishiro**
**1288, Kamezaku-cho**
**Hitachi-oota-shi Ibaraki 313(JP)**
Inventor: **Kitamura, Teruo**
**3600-234, Nakane**
**Katsuta-shi Ibaraki 312(JP)**
Inventor: **Mukoh, Akio**
**498-21, Kasahara-cho**
**Mito-shi Ibaraki 310(JP)**
Inventor: **Narahara, Toshikazu**
**409-5, Muramatsu Toukai-mura**
**Naka-gun Ibaraki 319-11(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

SID 1985 DIGEST OF TECHNICAL PAPERS, May 1985 T.J. SCHEFFER et al. "24x80 Character LCD Panel Using the Supertwisted Birefringence Effect" pages 120-123

Inventor: **Kando, Yasuhiko**
**922-1, Nakashima-cho**
**Mobara-shi Chiba 298(JP)**
Inventor: **Numata, Shunichi**
**1-15, Miyata-cho 3-chome**
**Hitachi-shi Ibaraki 317(JP)**
Inventor: **Fujisaki, Kooji**
**26-19, Higashi Oonuma-cho 2-chome**
**Hitachi-shi Ibaraki 316(JP)**

(74) Representative: **Patentanwälte Beetz sen. - Beetz jun. Timpe - Siegfried - Schmitt-Fumian**
**Steinsdorfstrasse 10**
**W-8000 München 22(DE)**

## Description

This invention relates to liquid crystal display elements employing a liquid crystal having a helical structure with a twist angle between the substrates in the range of 200 to 250°, and a particular orientation film which are free from scattering domains.

In conventional liquid crystal elements of the so-called twisted nematic (TN) type, the liquid crystal molecule orientation is controlled by means of orientation films disposed on the substrates comprising the electrodes so as to be twisted by 90°. Silicon monoxide (SiO) films obtained by oblique evaporation, and polyimide-based materials have mainly been used as orientation films. However, with TN type liquid crystal elements, large-capacity displays cannot be realized because difficulties are encountered in attaining a great improvement in the time sharing characteristics.

On the other hand, liquid crystal elements taking advantage of the so-called supertwisted birefringence effect (SBE) attained by orienting the liquid crystal molecules at a twist angle of 270° from one substrate to the other was reported at 1985 SID International Symposium held at Orlando FL. U.S.A. on April 30 - May 2 (SID 85 DIGEST, pp. 120 - 123) and is expected as a liquid crystal element which may find a new field of applications for liquid crystals.

However, a liquid crystal element such as an SBE liquid crystal element in which the twisted angle of the liquid crystal modecules is e.g. 270°, much larger than 90° which is adopted in the conventional TN mode liquid crystal elements, cannot successfully be combined with the conventional orientation films causing a small tilt angle which was subjected to orientation treatment by rubbing, because such a combination brings about a scattering domain (a domain in which light is scattered), which leads to a poor display quality. Until now no way has been found to prevent occurrence of the scattering domain except for making the tilt angle of the liquid crystal molecules by the orientation film larger. Although oblique evaporation is a means for making the tilt angle larger, it is unsuited for mass production of such an orientation film. Therefore, the realization of a film made of an organic polymer capable of causing a tilt angle larger than that by the conventional orientation film has been an important task to be attained.

In the conventional TN mode liquid crystal element which uses a nematic liquid crystal, the smaller the tilt angle caused by the orientation film, the better are the time sharing drive characteristics. Therefore, TN type liquid crystal elements have been prepared using orientation film materials causing a tilt angle of about 3° or less. However, in contrast to TN type liquid crystal elements, SBE type liquid crystal elements have the problem of occurrence of scattering domains due to a small tilt angle of the liquid crystal molecules caused by the orientation film.

It is the object of the present invention to provide SBE type liquid crystal display elements in which the twist angle of the nematic liquid crystal molecule orientation from one substrate to the other is in the range of 200 to 250°, and in which an orientation film made of an organic polyemr is used for orienting the liquid crystal molecules which does not lead to the occurrence of scattering domains.

The liquid crystal display element of the present invention comprises

- a pair of substrates, at least one of which is transparent,
- electrodes provided on the respective substrates,
- a liquid crystal layer disposed between the substrates comprising a nematic liquid crystal material which exhibits a positive dielectric constant anisotropy and contains an optically active substance, the liquid crystal molecule orientation direction in the liquid crystal layer being twisted by a twist angle of 200 to 250° from the surface of one of the substrates toward the surface of the other substrate so as to form a helical structure,
  and
- a polyimide orientation film provided on the substrates with the electrodes;

characterized in that the polyimide orientation film consists of
a polyimide copolymer prepared by subjecting a diamine compound comprising a long-chain hydrocarbon group and a diamine compound comprising a trifluoromethyl group with a tetracarboxylic acid dianhydride to copolycondensation,
or of a polyblend of such polyimide copolymers
and is subjected to rubbing to cause a tilt angle of the liquid crystal molecules contiguous to the polyimide orientation film of at least 3°.

US-A-4 494 824 discloses liquid crystal display devices comprising orientation films on the basis of an organic copolymer resin and particularly a polyimide-siloxane copolymer resin. The orientation of these films is controlled by rubbing treatment. Examples of diamine compounds having a long-chain hydrocarbon group are disclosed in column 5, second paragraph, of this document, however, there is no indication whether or not the resulting polyimide-siloxane copolymer resin films are suitable for causing a tilt angle of

at least 3° after rubbing treatment.

The above-mentioned diamine compound comprising a long-chain hydrocarbon group is selected from compounds represented by the general formula I

$$X - (CH_2)_n - X \qquad (I)$$

wherein X is $-NH_2$ or $-CONH-NH_2$, and n is an integer of 8 to 13.

The above-mentioned diamine compound comprising a trifluoromethyl group is preferably selected from compounds represented by the general formula II

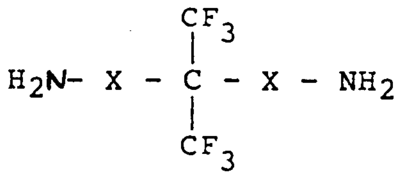

(II)

wherein X is

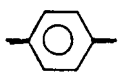 or 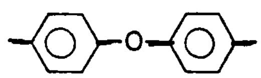 .

Examples of such diamine compounds are:

$H_2N-(CH_2)_8-NH_2$
$H_2N-(CH_2)_9-NH_2$
$H_2N-(CH_2)_{10}-NH_2$
$H_2N-(CH_2)_{11}-NH_2$
$H_2N-(CH_2)_{12}-NH_2$
$H_2N-(CH_2)_{13}-NH_2$
$H_2N-NHCO-(CH_2)_8-CONH-NH_2$
$H_2N-NHCO-(CH_2)_9-CONH-NH_2$
$H_2N-HNCO-(CH_2)_{10}-CONH-NH_2$
$H_2N-NHCO-(CH_2)_{11}-CONH-NH_2$
$H_2N-NHCO-(CH_2)_{12}-CONH-NH_2$
$H_2N-NHCO-(CH_2)_{13}-CONH-NH_2$

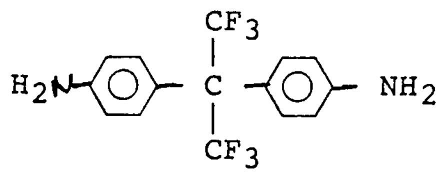

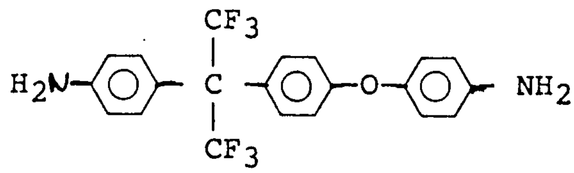

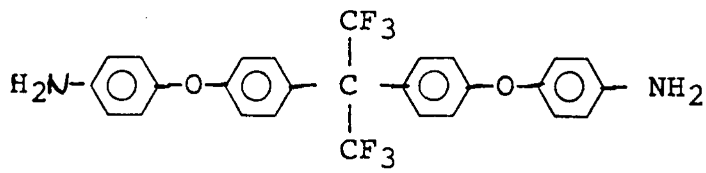

Examples of the tetracarboxylic acid dianhydride are:

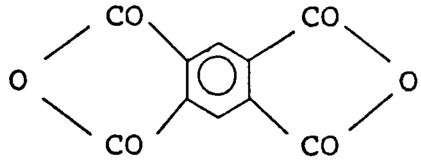

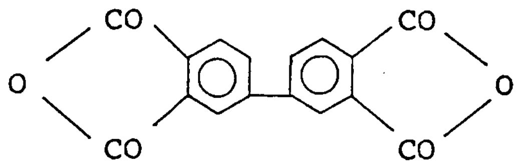

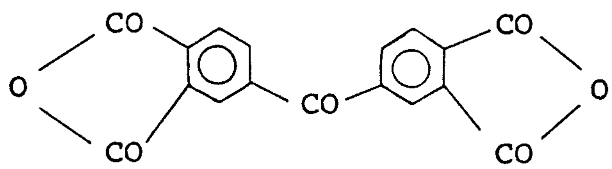

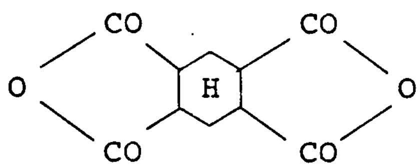

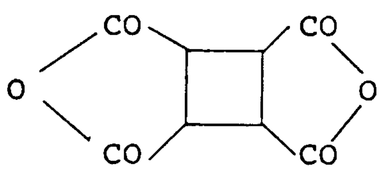

.

The polyimide copolymer may be prepared by using at least one further diamine compound selected from diaminodiphenyl ethers represented by the general formula III

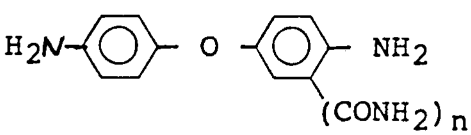

(III)

wherein n is 0 or 1 ,
and diaminosiloxanes represented by the general formula IV

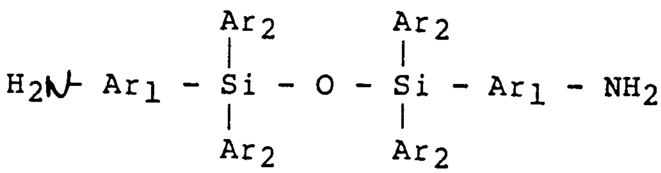 (IV)

wherein $Ar_1$ is an alkylene or phenylene group, and $Ar_2$ is an alkyl or aryl group.

Specific examples of compounds represented by the above general formula IV are:

(a)

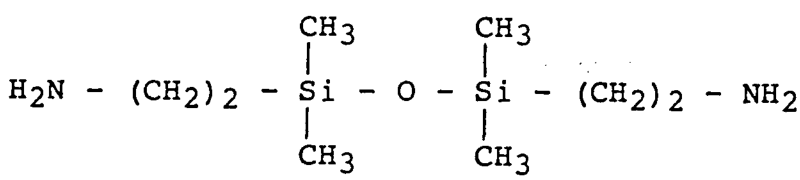

(b)

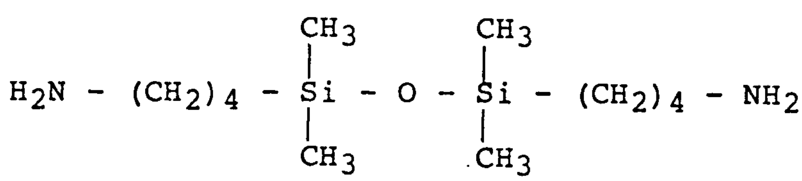

(c)

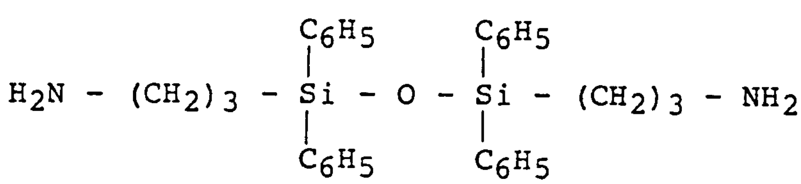

(d)

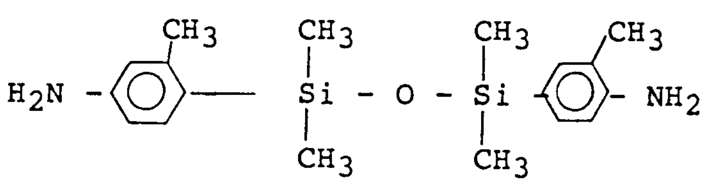

(e)

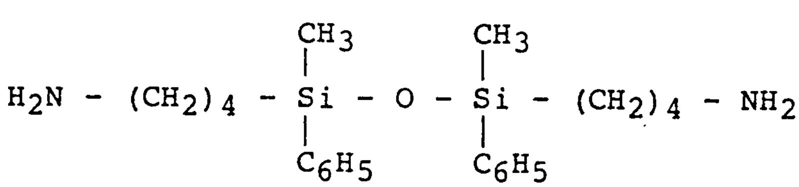

(f)

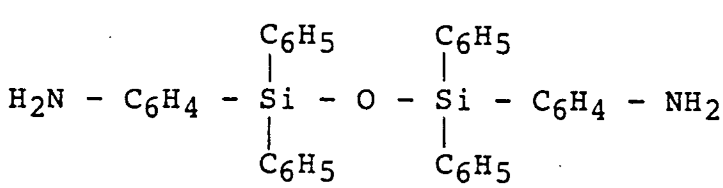

The polyimide orientation film is made of a polyimide copolymer obtained by subjecting the above-mentioned diamine compounds and the tetracarboxylic dianhydride to copolycondensation. Alternatively, the polyimide orientation film may be made of a polyblend of the respective polyimide copolymers obtained through copolycondensation. If necessary, a silane coupling agent may be added to the polymer.

The occurrence of scattering domains is prevented through the selection of orientation films causing a tilt angle of the nematic liquid crystal molecules of at least 3°.

In the liquid crystal elements of the present invention, in order to adjust the twist angle of the liquid crystal molecules at 200 to 250°, it is necessary to incorporate an optically active substance in the liquid crystal. The optically active substances may be those which are generally used. For example, an optically active substance such as S 811, S 996 or S 1082 (products of Merck, DE) or C-15 or CB-15 (products of British Drug Houses, GB) is preferably added to a nematic liquid crystal in an amount of 0.5 to 1% by mass, based on the nematic liquid crystal.

The liquid crystal to be used in the present invention may be a nematic liquid crystal which is generally used in TN type liquid crystal elements.

The above-mentioned orientation film may be formed on the substrates for the liquid crystal elements in the same manner as for the TN type elements, i.e., by methods such as immersion, spin coating, spray coating, and printing using the synthetic polyimide varnish. The formed film is subjected to rubbing to cause an intended tilt angle of the liquid crystal molecules contiguous to the film

The orientation film as used according to the present invention may also be formed on an inorganic film made of $SiO_2$, $Al_2O_3$ or $TiO_2$.

EXAMPLE

As indicated in Table 1 a diamine compound having a long-chain hydrocarbon group as and a diamine compound having trifluoromethyl groups was copolycondensated with pyromellitic acid dianhydride in a solvent to obtain a polyamic acid varnish. The varnish thus obtained was applied on a substrate for a liquid crystal element and then baked at 250 °C to obtain an 80 nm thick polyimide film.

Subsequently, in order to adjust the twist angle of the liquid crystal molecules at 250°, the upper and lower electrode substrates were subjected to rubbing at the corresponding angles. A spacer was then disposed between the substrates to assemble a liquid crystal cell having a gap of 8μm. A mixture of a nematic liquid crystal having a positive dielectric constant anisotropy and composed mainly of a biphenyl liquid crystal, an ester cyclohexane (ECH) liquid crystal and a phenylcyclohexane (PCH) liquid crystal comprising 0.5% by weight of the optically active substance S 811 (product of Merck) was then introduced into the gap by means of vacuum to form a liquid crystal display element.

Thereafter, the absorption axes of the upper and lower polarizing plates were adjusted to examine whether or not scattering domains (domains where light is scattered) occured. The tilt angle caused by the above-prepared orientation film was determined using a biphenyl liquid crystal E-7 (a product of British Drug Houses) by the customary rotational method with a He-Ne laser. The results are shown in Table 1.

Table 1

| Composition of orientation film | | tilt angle of orientation film | twist angle of liquid crystal molecules | occurrence of scattering domains |
|---|---|---|---|---|
| $H_2N-(CH_2)_8-NH_2$ | 0.05 mol | 6.3° | 250° | no |
| 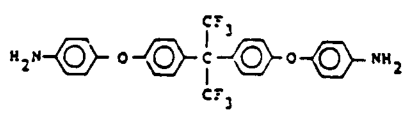 | 0.05 mol | | | |
| 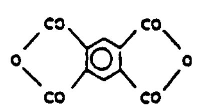 | 0.1 mol | | | |

COMPARATIVE EXAMPLE 1

4,4'-diaminodiphenyl ether as listed in Table 2 was polycondensated with pyromellitic acid dianhydride in a solvent to obtain a polyamic acid varnish. The varnish thus obtained was applied on a substrate for a liquid crystal element and then baked at 250 °C to obtain an 80 nm thick polyimide film.

Using the above-obtained orientation film, a liquid crystal display element was formed in substantially the same manner as in the above EXAMPLE, and the same tests were conducted on the element. The results are shown in Table 2.

COMPARATIVE EXAMPLE 2

4,4'-bis (p-aminophenoxy)-2,2-diphenylpropane as listed in Table 2 was polycondensated with isophthaloyl chloride in a solvent to obtain a polyamide varnish. The varnish thus obtained was applied on a substrate for a liquid crystal element and then baked at 200 °C to obtain a 60 nm thick polyimide film.

Using the above-obtained orientation film, a liquid crystal display element was formed in substantially the same manner as in the above EXAMPLE, and the same tests were conducted on the element. The results are shown in Table 2.

As is apparent from Tables 1 and 2, the liquid crystal element according to the present invention was free of scattering domains, whereas the liquid crystal elements obtained according to the Comparative Examples did show scattering domains.

Table 2

| Ex. No. | Composition of orientation film | tilt angle of orientation film | twist angle of liquid crystal molecules | occurrence of scattering domains |
|---|---|---|---|---|
| Comp. Ex. 1 | 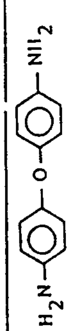 0.1 mol 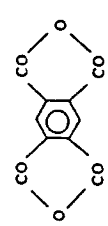 0.1 mol | 2.5° | 220° | yes |
| Comp. Ex. 2 | 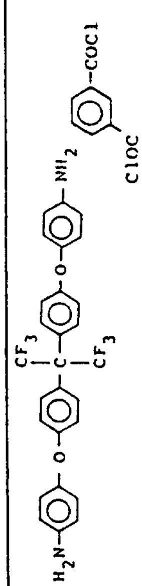 0.1 mol 0.1 mol | 2.7° | 200° | yes |

As is apparent from the foregoing description, the SBE-mode liquid crystal elements according to the present invention are suitable for mass production.

The liquid crystal display elements of the present invention can be advantageously used as optical modulating elements and for large scale displays.

## Claims

1. A liquid crystal display element comprising
   - a pair of substrates, at least one of which is transparent,
   - electrodes provided on the respective substrates,
   - a liquid crystal layer disposed between the substrates comprising a nematic liquid crystal material which exhibits a positive dielectric constant anisotropy and contains an optically active substance, the liquid crystal molecule orientation direction in the liquid crystal layer being twisted by a twist angle of 200 to 250° from the surface of one of the substrates toward the surface of the other substrate so as to form a helical structure,

     and
   - a polyimide orientation film provided on the substrates with the electrodes,

   **characterized** in that the polyimide orientation film consists of

   a polyimide copolymer prepared by subjecting a diamine compound comprising a long-chain hydrocarbon group and a diamine compound comprising a trifluoromethyl group with a tetracarboxylic acid dianhydride to copolycondensation,

   or of a polyblend of such polyimide copolymers

   and is subjected to rubbing to cause a tilt angle of the liquid crystal molecules contiguous to the polyimide orientation film of at least 3°.

2. The liquid crystal display element according to claim 1, characterized in that the diamine compound comprising a long-chain hydrocarbon group is selected from compounds represented by the general formula I

   $X - (CH_2)_n - X$ (I)

   wherein
   X is $-NH_2$ or $-CONH-NH_2$,
   and
   n is an integer of 8 to 13,

   and the diamine compound comprising a trifluoromethyl group is selected from compounds represented by the general formula II

   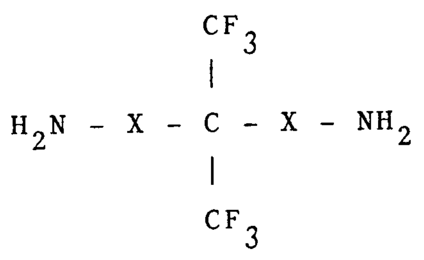

   (II)

   wherein X is

   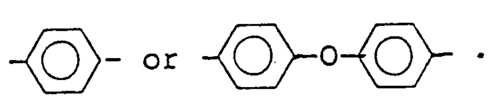

3. The liquid crystal display element according to claim 1 or 2, characterized in that the polyimide copolymer is prepared by using at least one further diamine compound selected from diaminodiphenyl ethers represented by the general formula III

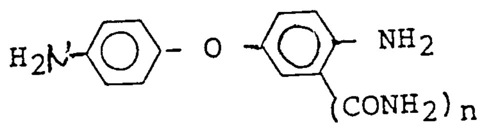

(III)

wherein n is 0 or 1,

and diaminosiloxanes represented by the general formula IV

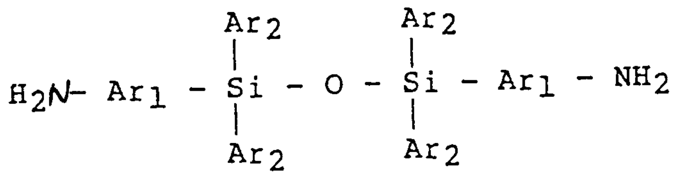

(IV)

wherein

- $Ar_1$ is an alkylene or phenylene group, and
- $Ar_2$ is an alkyl or aryl group.

**Revendications**

**1.** Elément d'affichage à cristal liquide comprenant
- une paire de substrats, dont au moins un est transparent,
- des électrodes fournies sur les substrats respectifs,
- une couche de cristaux liquides disposée entre les substrats comprenant une matière à cristal liquide nématique qui présente une anisotropie à constante positive et contient une substance optiquement active, la direction d'orientation des molécules de cristaux liquides dans la couche de cristaux liquides étant torsadée d'un angle de torsion de 200 à 250° à partir de la surface d'un des substrats vers la surface de l'autre substrat de manière à former une structure hélicoïdale, et
- une pellicule d'orientation de polyimide fournie sur les substrats avec les électrodes,

caractérisé en ce que la pellicule d'orientation de polyimide se compose de

un copolymère de polyimide préparé en soumettant un composé diamine comprenant un groupe hydrocarboné à longue chaîne et un composé diamine comprenant un groupe trifluorométhyle avec un dianhydride d'acide tétracarboxylique, à une copolycondensation,

ou de

un polymélange de tels copolymères de polyimide,

et

et en ce qu'on la soumet à un frottement pour provoquer un angle d'inclinaison des molécules de cristal liquide contiguës à la pellicule d'orientation de polyimide d'au moins 3°.

**2.** Elément d'affichage à cristal liquide selon la revendication 1, caractérisé en ce que le composé diamine comprenant un groupe hydrocarboné à longue chaîne est choisi parmi les composés représentés par la formule générale I

$X - (CH_2)_n - X$ (I)

dans laquelle X représente $-NH_2$ ou $-CONH-NH_2$ ,

et

n est un nombre entier valant de 8 à 13,

et le composé diamine comprenant un groupe trifluorométhyle est choisi parmi les composés représentés par la formule générale II

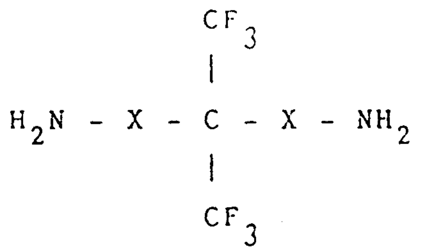

(II)

dans laquelle X représente

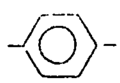 ou 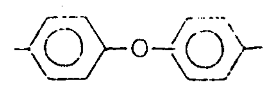 .

3. Elément d'affichage à cristal liquide selon la revendication 1 ou 2, caractérisé en ce qu'on prépare le copolymère de polyimide en utilisant au moins un autre composé de diamine choisi parmi les diaminodiphényléthers représentés par la formule générale III

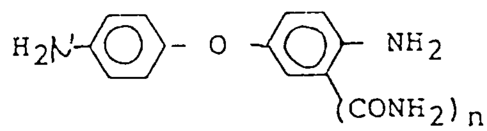

dans laquelle n vaut 0 ou 1,
et les diaminosiloxanes représentés par la formule générale IV

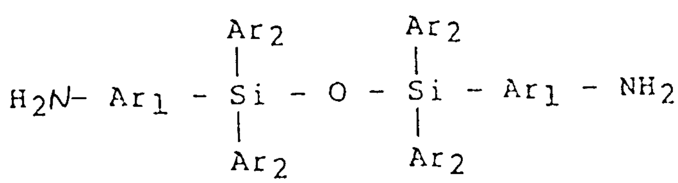

(IV)

dans laquelle $Ar_1$ est un groupe alcoylène ou phénylène,
et
$Ar_2$ est un groupe alcoyle ou aryle.

## Patentansprüche

1. Flüssigkristall-Anzeigeelement, das umfaßt:
   - zwei Substrate, von denen mindestens eines transparent ist,
   - auf den betreffenden Substraten vorgesehene Elektroden,
   - eine zwischen den Substraten angeordnete Flüssigkristallschicht, die ein nematisches Flüssigkristallmaterial enthält, das eine positive dielektrische Anisotropie aufweist und eine optisch aktive Substanz enthält, wobei die Orientierungsrichtung der Flüssigkristallmoleküle in der Flüssigkristallschicht um einen Winkel von 200 bis 250° von der Oberfläche eines der Substrate gegen die Oberfläche des anderen Substrats unter Bildung einer helikalen Struktur verdrillt ist,
     und
   - eine Polyimid-Orientierungsschicht auf dem Substrat mit den Elektroden,

   **dadurch gekennzeichnet,** daß die Polyimid-Orientierungsschicht
   - aus einem Polyimidcopolymer, das durch Copolykondensation einer Diaminverbindung, die einen

langkettigen Kohlenwasserstoff aufweist, und einer Diaminverbindung, die eine Trifluormethylgruppe aufweist, mit einem Tetracarbonsäuredianhydrid erhalten ist,

oder

einem Polyblend solcher Polyimidcopolymeren besteht,

und zur Erzeugung eines Anstellwinkels der an die Polyimid-Orientierungsschicht angrenzenden Flüssigkristallmoleküle von mindestens 3° gerieben ist.

**2.** Flüssigkristall-Anzeigeelement gemäß Anspruch 1, dadurch gekennzeichnet, daß die Diaminverbindung mit einer langkettigen Kohlenwasserstoffgruppe unter Verbindungen der allgemeinen Formel I,

$X - (CH_2)_n - X$ (I),

worin X

$-NH_2$ oder $-CONH-NH_2$ bedeuten und n eine ganze Zahl von 8 bis 13 ist,

und die Diaminverbindung mit einer Trifluormethylgruppe unter Verbindungen der allgemeinen Formel II,

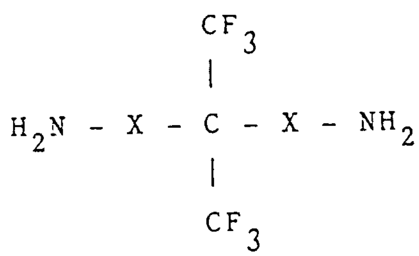

(II),

worin X

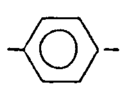 oder 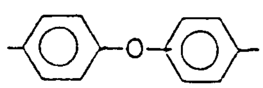

ist,

ausgewählt sind.

**3.** Flüssigkristall-Anzeigeelement gemäß Anspruch 1 oder 2, dadurch gekennzeichnet, daß das Polyimidcopolymer unter Verwendung von mindestens einer weiteren Diaminverbindung hergestellt ist, die unter Diaminodiphenylethern der allgemeinen Formel III,

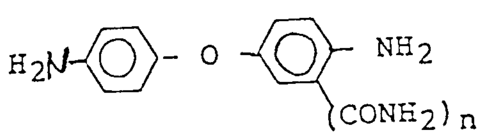

(III),

worin n 0 oder 1 ist,

und Diaminosiloxanen der allgemeinen Formel IV,

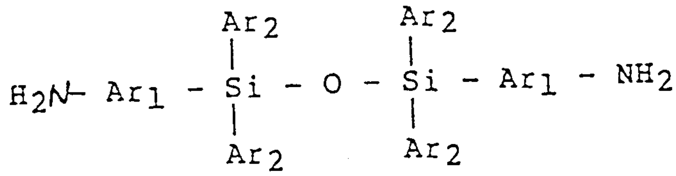

(IV),

worin $Ar_1$ eine Alkylen- oder Phenylengruppe und $Ar_2$ eine Alkyl- oder Arylgruppe bedeuten, ausgewählt ist.